(19) Europäisches Patentamt

European Patent Office

Office européen des brevets

(11) **EP 1 052 013 A1**

(12) **DEMANDE DE BREVET EUROPEEN**

(43) Date de publication:
**15.11.2000 Bulletin 2000/46**

(51) Int. Cl.7: **B01D 63/06**, B01D 69/10

(21) Numéro de dépôt: **00119122.0**

(22) Date de dépôt: **31.03.1998**

(84) Etats contractants désignés:
**BE DE DK FR GB IT NL SE**

(30) Priorité: **09.04.1997 FR 9704359**

(62) Numéro(s) de document de la (des) demande(s) initiale(s) en application de l'article 76 CBE:
**98400756.7 / 0 870 534**

(71) Demandeur:
**SOCIETE DES CERAMIQUES TECHNIQUES
65460 Bazet (FR)**

(72) Inventeurs:
• **Garcera, Daniel
  65000 Tarbes (FR)**
• **Toujas, Edouard
  65460 Bazet (FR)**

(74) Mandataire: **Cabinet Hirsch
  34, Rue de Bassano
  75008 Paris (FR)**

Remarques:
Cette demande a été déposée le 04 - 09 - 2000 comme demande divisionnaire de la demande mentionnée sous le code INID 62.

(54) **Support macroporeux à gradient de perméabilite et son procédé de fabrication**

(57) L'invention a pour objet un support macroporeux présentant un gradient de perméabilité selon le sens d'écoulement du fluide à traiter. Ce support macroporeux présente de préférence un gradient de porosité moyenne sur la ceinture selon le sens d'écoulement du fluide à traiter, la porosité moyenne augmentant selon ledit sens d'écoulement.

L'invention a encore pour objet le procédé de préparation de ce support macroporeux et son utilisation pour la filtration tangentielle.

FIG.1

**Description**

ARRIERE-PLAN DE L'INVENTION

La présence invention concerne un support macroporeux qui présente un gradient de perméabilité le long de l'écoulement du fluide à traiter, ainsi que son procédé de fabrication. L'invention concerne notamment un tel support macroporeux en matériau céramique fritté, en verre fritté, en métal fritté ou en carbone, percé de un ou plusieurs canaux longitudinaux et parallèles, et dont la surface desdits canaux est recouverte d'une ou plusieurs couches filtrantes en un matériau céramique fritté ou organique, dans lesquels circule un liquide à épurer ou à concentrer, ou de façon générale un fluide à traiter. L'ensemble support macroporeux et couche filtrante est appelé ci-dessous membrane.

Dans un tel dispositif, le fluide à traiter arrive par une chambre d'entrée à une extrémité d'entrée du support ou bloc (macro)poreux, s'écoule dans les canaux jusqu'à une extrémité de sortie, vers une chambre de sortie; une fraction de liquide à traiter ou perméat traverse radialement la couche et le support macroporeux, avant d'être recueilli dans la chambre de sortie côté perméat.

Suivant le principe de la filtration tangentielle, le liquide à traiter circule le long du ou des canaux, et cet écoulement induit une perte de charge entre l'entrée et la sortie desdits canaux. Cette perte de charge dépend d'un ensemble de paramètres tels que par exemple, la vitesse du liquide à traiter ou à épurer dans le canal, la viscosité dudit liquide, de même que le diamètre hydraulique du canal. Cette variation décroissante de la pression du liquide à traiter le long du ou des canaux modifie l'écoulement transversal du perméat qui traverse la couche filtrante puis le corps macroporeux.

Il s'ensuit une décroissance de la perte de charge transversale qui est la différence entre la pression d'un point du canal et la pression de la chambre de perméat, suivant le sens de circulation du liquide dans le ou les canaux. Cette décroissance peut affecter les performances du dispositif de filtration, en réduisant par exemple le débit de perméat, ou en modifiant par exemple le seuil de rétention, et aussi, en établissant des régimes de filtration différents le long du ou des canaux.

Par exemple, dans une membrane classique présentant des canaux de 4 mm de diamètre, la pression d'entrée dans les canaux est de 3,8 bars, la pression de sortie des canaux est de 2 bars, tandis que la pression dans la chambre de sortie du perméat est constante par exemple 1,5 bars. Ainsi, la perte de charge transversale varie le long de la membrane de 2,3 à 0,5 bars.

Avec une telle membrane classique, l'ensemble des paramètres dimensionnels liés à la géométrie de l'élément filtrant, hydrauliques liés au liquide à traiter et aux conditions de fonctionnement, ne permettent pas d'optimiser complètement l'opération de filtration parce qu'il est impossible d'être à l'optimum de perte de charge transversale tout au long de la membrane.

ETAT DE LA TECHNIQUE.

Le brevet US-P-4,105,547 décrit un dispositif de filtration tangentielle utilisant un système de compensation annexe de la perte de charge longitudinale. Ledit système annexe consiste en ce que la surface extérieure du support côté du perméat, est balayée par le perméat qui circule dans le même sens que le liquide à traiter de manière de créer dans la chambre de perméat une perte de charge longitudinale telle que la perte de charge transversale reste approximativement constante le long du filtre.

Le brevet EP-A-0 333 753 décrit un mode de réalisation de ce dispositif qui permet de compenser cette variation de perte de charge transversale induite par la circulation d'un liquide à l'intérieur d'un ou plusieurs canaux. Comme dans le dispositif précédent, ledit système consiste en ce qu'il est établi une circulation de perméat à la surface extérieure d'une membrane tubulaire, d'un support poreux percé d'un canal ou bien d'un bloc poreux lui aussi percé d'un ou plusieurs canaux. De tels médias filtrants peuvent être assemblés unitairement ou en faisceau dans un carter où la chambre de perméat est remplie de corps de remplissage tels que billes ou granulés qui induisent une résistance à l'écoulement longitudinal du perméat qui est de nature à contrebalancer la variation de perte de charge longitudinale induite par la circulation du liquide à traiter dans le ou les canaux recouverts d'une couche de filtration.

Ces deux systèmes selon l'art antérieur, nécessitent de créer une boucle de recirculation du perméat activée par une pompe de circulation qui doit être en mesure de fournir la perte de charge souhaitée. De tels systèmes utilisent nécessairement des carters ou enceintes spécifiques dans lesquels il pourra être établi une circulation de perméat sur la surface externe du ou des médias filtrants et dans le même sens que celui du liquide à traiter à l'intérieur du ou des canaux.

Ces dispositifs de l'art antérieur présentent plusieurs inconvénients, tels que :

- surcoût de la boucle de recirculation et de son système de contrôle et régulation;
- coût énergétique lié au fonctionnement de cette boucle supplémentaire;
- surcoût lié à la spécificité du ou des carters.

RESUME DE L'INVENTION

L'invention a donc pour but de fournir un dispositif de filtration tangentielle qui soit simple, qui ne nécessite aucune adaptation des matériels existants et aucun coût énergétique additionnel.

Ainsi, l'invention fournit un support macroporeux pour filtration tangentielle présentant un gradient de perméabilité selon le sens d'écoulement du fluide à traiter.

L'invention fournit aussi un support macroporeux pour filtration tangentielle présentant un gradient de porosité moyenne sur la ceinture selon le sens d'écoulement du fluide à traiter, la porosité moyenne augmentant selon ledit sens d'écoulement.

Selon un mode de réalisation, le gradient de porosité moyenne correspond à un gradient d'imprégnation à partir de la surface externe dudit support.

Selon un autre mode de réalisation, le diamètre des pores de la zone imprégnée est compris entre 0,1 et 0,8 fois le diamètre des pores de la zone non-imprégnée, de préférence entre 0,3 et 0,5.

Selon un autre mode de réalisation, le ratio porosité moyenne sortie / porosité moyenne entrée est compris entre 1,1 et 4.

Selon un autre mode de réalisation, le niveau de porosité initial est compris entre 15 et 45%.

L'invention fournit aussi une membrane comprenant un support macroporeux selon l'invention, en association avec une couche de filtration.

L'invention fournit aussi un procédé de préparation d'un support macroporeux selon l'invention, comprenant l'étape d'immersion dans une barbotine ou une solution organique en position sensiblement verticale d'un support macroporeux dont l'extrémité inférieure est bouchée.

Selon un mode de réalisation, le temps de séjour est compris entre 0 et 15 sec., de préférence entre 0,5 et 8 sec. pour les parties respectivement les moins et plus immergées.

L'invention fournit encore un procédé de préparation d'un support macroporeux selon l'invention, comprenant l'étape de pulvérisation d'une barbotine ou d'une solution organique sur un support macroporeux normal, la zone de pulvérisation se déplaçant le long dudit support.

Selon un mode de réalisation, la vitesse de déplacement de la buse de pulvérisation est comprise entre 0,1 cm/s et 3 cm/s, de préférence 0,7 cm/s et 1,7 cm/s.

Selon une variante, le débit matière de pulvérisation est variable le long dudit support, la vitesse de déplacement de la buse de pulvérisation étant constante.

Selon une autre variante, le débit matière de pulvérisation est constant, la vitesse de déplacement de la buse de pulvérisation étant variable le long dudit support.

L'invention fournit encore un procédé de préparation d'un support macroporeux selon l'invention, comprenant l'étape de saturation en eau d'un support macroporeux normal, puis de l'étape d'injection de gaz dans ledit support dont l'extrémité de sortie est libre, partiellement obturée ou complètement obturée, et l'étape d'immersion en position sensiblement horizontale dudit support dans une barbotine ou une solution organique.

L'invention a encore pour objet un support macroporeux saturé en liquide présentant un gradient de volume libre.

Enfin, l'invention fournit l'utilisation d'un support macroporeux selon l'invention, pour la filtration tangentielle.

Enfin, l'invention fournit encore l'utilisation d'une membrane selon l'invention, pour la filtration tangentielle.

BREVE DESCRIPTION DES FIGURES.

L'invention est décrite dans la description qui suit, et en référence aux dessins, dans lesquels :

- la figure 1 est une coupe selon l'axe longitudinal d'un support selon une variante de l'invention;
- la figure 2 est une coupe transversale d'un support selon une variante de l'invention.

DESCRIPTION DETAILLEE DE L'INVENTION.

Support macroporeux.

Le terme support macroporeux est utilisé dans son sens commun pour l'homme de l'art, et englobe notamment les supports pour filtration par membrane y compris les fibres creuses. Le terme de porosité non modifiée ou initiale désigne la porosité du support macroporeux avant application du traitement selon l'invention. La porosité représente le volume de pores du support exprimé en pourcent volumique du volume de support . Un support "initial" est un support avant l'application du traitement selon l'invention. En général, un support macroporeux "initial" présente un diamètre de pore de plus de 4 μm, typiquement compris entre 4 et 50 μm.

Le terme de porosité modifiée désigne la porosité de la zone du support modifiée par l'application du traitement selon l'invention.

Selon l'invention, la porosité moyenne d'une tranche transversale d'épaisseur donnée du support macroporeux varie de façon croissante dans la direction longitudinale dudit support, qui est la direction de circulation du liquide à traiter, de façon à ce que la perméabilité dudit support dans la direction transversale varie de façon similaire dans la direction longitudinale. Le terme de porosité moyenne désigne la moyenne de porosité entre les zones modifiées et non modifiées du support macroporeux.

Ce gradient de perméabilité engendre un gradient longitudinal de la perte de charge transversale du perméat à travers le support, lequel est approximativement égal au gradient longitudinal de pression de liquide à traiter dans le canal. Il en découle que la perte de charge transversale entre l'intérieur du canal et l'interface entre la couche filtrante et le support est approximativement constante sur toute la longueur de la membrane, ce qui permet d'optimiser la filtration sans faire appel à un appareillage connexe.

Ce gradient de perméabilité est obtenu notamment par un gradient de porosité moyenne, ce qui sera décrit plus en détail ci-dessous. On obtiendrait le même résultat on modifiant le diamètre des pores, soit dans la masse du support, soit dans la région du support comprise entre la surface extérieure du support côté perméat et l'enveloppe des canaux qui le traverse qu'on appellera ci dessous "ceinture" du support.

Différents procédés et variantes sont disponibles pour atteindre les objectifs ci-dessus. La première variante consiste en une imprégnation du support macroporeux sur une partie de son épaisseur, à partir de sa surface externe. Le front d'imprégnation selon cette variante peut être net ou diffus. Selon cette variante il y a alors modification de la porosité moyenne du support. Une autre variante consiste en un dépôt sur la surface extérieure du support côté perméat d'une couche d'épaisseur décroissante, dont la dimension des pores est inférieure à celle des pores du support. Ces deux variantes peuvent être combinées. Dans une troisième variante, le gradient de porosité est obtenu directement au moment de la fabrication du support macroporeux et par exemple en modifiant continûment la charge d'un agent porogène tout au long du support lors de son extrusion par une extrudeuse à vis par exemple ou en réalisant le frittage du support macroporeux suivant un gradient de température et/ou par exemple en utilisant un four à passage à gradient de vitesse.

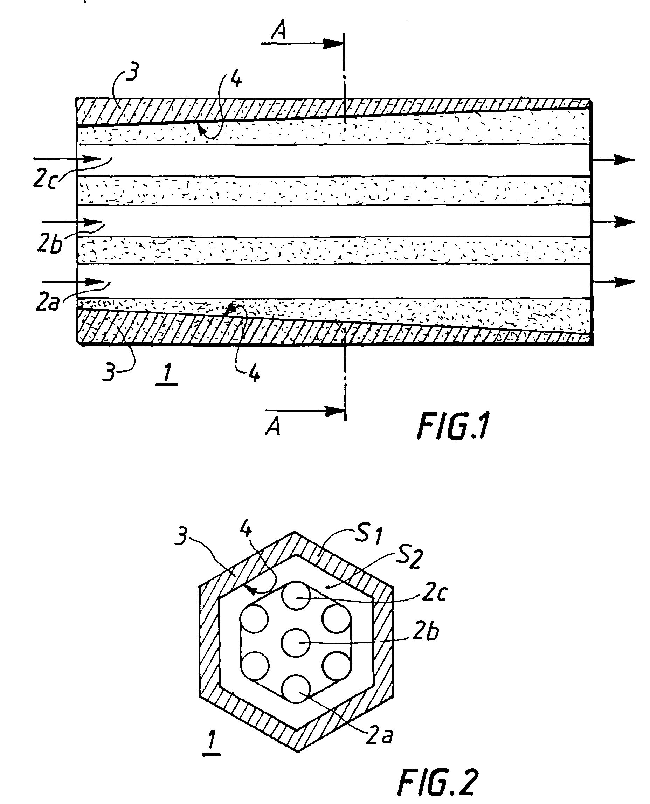

En référence à la figure 1, le support selon l'invention 1 comprend des canaux 2a, 2b et 2c, et présente au niveau de sa surface extérieure une zone imprégnée d'un matériau, représentée par la zone hachurée 3. Le sens de l'écoulement du liquide à traiter est indiqué par les flèches. Dans le mode de réalisation représenté, le front 4 est net; il peut cependant être diffus.

En référence à la figure 2 qui est une coupe A-A, le même support est représenté avec les mêmes références. La section de la ceinture correspond à la somme des surfaces S1 et S2, qui sont les surfaces des sections des zones modifiée et non-modifiée respectivement. Le front représenté est le même que celui représenté à la figure 1.

Selon l'invention, le support présente dans sa direction longitudinale un gradient de porosité moyenne (Pm). La porosité moyenne est calculée de façon classique par une intégrale $Pm = \int P dS$ où P est la porosité en un point et dS l'élément de surface dans la section du support considérée, l'intégrale étant prise sur toute la surface de la section de la ceinture.

Dans le cas particulier décrit par les figures 1 et 2, la porosité moyenne peut être calculée comme une moyenne entre la porosité de la zone modifiée et la porosité de la zone non modifiée sur la surface de la section de la ceinture. Cette moyenne est définie en termes de surface. Les éléments nécessaires au calcul de la porosité moyenne sont indiqués figure 2. Sur la figure 2, dans laquelle on note un front très net, on peut calculer la porosité moyenne Pm comme suit :

$Pm = [(P1 \times S1) + (P2 \times S2)] / (S1 + S2)$ où P1 et P2 sont les porosités respectives de la zone modifiée de surface S1 et de la zone non modifiée de surface S2.

Le dispositif de l'invention est selon un mode de réalisation un bloc macroporeux percé d'un ou plusieurs canaux recouverts éventuellement d'une couche filtrante, et imprégné, à partir de sa surface extérieure côté perméat, de manière décroissante dans le sens de la longueur, au moins sur une partie de son épaisseur, avec un matériau minéral ou organique de manière à réduire la porosité de la zone imprégnée par rapport à la zone non imprégnée. Le rapport de la porosité moyenne de l'extrémité de sortie du bloc macroporeux sur la porosité moyenne de l'extrémité d'entrée du bloc macroporeux est compris entre 1,1 et 4. Cette évolution de porosité permet d'établir une évolution de perte de charge transversale qui soit sensiblement équivalente à la perte de charge longitudinale, induite par le liquide à traiter qui circule dans le ou les canaux. En effet au passage du support macroporeux, le perméat subit une résistance supplémentaire à l'écoulement dans la zone imprégnée dont la porosité est plus faible que dans la zone non imprégnée. Cette contrainte croît avec l'épaisseur de la zone imprégnée, et donc doit être plus importante au niveau de l'entrée du fluide à traiter.

Un tel dispositif de filtration impose donc un sens de circulation pour le liquide à traiter, c'est à dire l'extrémité du bloc poreux la plus imprégnée sera disposée du côté de la chambre d'entrée du liquide à traiter, l'autre extrémité faiblement imprégnée est elle disposée du côté de la chambre de sortie du liquide à traiter.

Dans ces conditions de fonctionnement, on établit entre l'extrémité d'entrée du support macroporeux et son extrémité de sortie une perte de charge longitudinale suffisante pour permettre qu'une fraction du liquide à traiter qui circule dans le ou les canaux, traverse la couche filtrante et le support macroporeux.

La perte de charge transversale est définie de manière à obtenir un régime de filtration compatible avec la nature du liquide à traiter. Elle a donc été adaptée par avance à la vitesse de circulation dans le ou les canaux du fluide à traiter, et à aux caractéristiques de viscosité et au débit de filtration dudit fluide. A l'inverse pour réaliser la filtration avec une membrane donnée selon l'invention, on adapte la vitesse de circulation du liquide à filtrer dans les canaux de façon à obtenir un gradient longitudinal de perte de charge dans les canaux égal au gradient longitudinal de perte de charge transversale subie par le perméat.

Du fait de la porosité de la zone modifiée, de même que de la décroissance de celle-ci dans le sens longitudinal d'écoulement du fluide à traiter, il s'ensuit une bonne homogénéité de la perte de charge transversale entre l'intérieur des canaux et l'interface entre la couche filtrante et le support macroporeux, le long du ou des canaux, et donc une homogénéité du flux de perméation.

Le matériau d'imprégnation de la porosité du bloc macroporeux peut être un matériau céramique de même composition que celle du bloc macroporeux. Dans ce cas, le dispositif de filtration présente une résistance à la corrosion au moins aussi élevée que celle du bloc poreux.

Dans le cas où le matériau d'imprégnation est de même composition que celui du bloc macroporeux, on bénéficie d'une égalité des coefficients de dilatation. Dans ce cas, le dispositif de filtration ne présente aucun risque de fissuration pouvant résulter des contraintes thermiques lors de sa fabrication, puis de son utilisation avec des fluides chauds, ou de la stérilisation à la vapeur d'eau.

Si par ailleurs, le matériau d'imprégnation est obtenu à partir d'une poudre de même composition et de température de frittage compatible avec celle à partir de laquelle est obtenue la couche filtrante, il est inutile d'effectuer des opérations de frittage séparées pour la couche filtrante et le matériau d'imprégnation. Dans ce cas, l'opération d'imprégnation n'a aucune incidence sur les opérations de frittage classiquement mises en oeuvre pour la fabrication d'éléments de filtration céramiques.

Le matériau d'imprégnation, ainsi qu'il a été indiqué, peut être de même nature que le matériau du support macroporeux, à savoir minéral et introduit dans le support sous forme d'une suspension ou barbotine. Si le matériau est d'origine organique, il peut être toute résine et par exemple une résine époxyde ou un polymère et par exemple un PTFE introduit sous forme d'une suspension. La solution ou composition d'imprégnation présente une viscosité adaptée, par exemple comprise entre 15-400 mPa.s, de préférence 30-100 mPa.s.

PROCEDE DE PREPARATION.

Procédé de fabrication par trempage.

Notamment lorsque le matériau d'imprégnation est un matériau céramique ou polymérique, le procédé de fabrication du dispositif de filtration comprend les étapes de préparation d'une barbotine défloculée à partir d'une poudre d'un matériau céramique ou polymérique dont la taille moyenne de particules est comprise entre 0,1 et 4 microns, de viscosité adaptée à la présente technologie de trempage, et dont la concentration en poudre de matériau céramique ou polymérique est comprise entre 2,5 et 75% volumique en fonction de l'épaisseur du bloc poreux que l'on souhaite imprégner, suivie de l'étape de trempage progressif du bloc poreux dont les extrémités des canaux sont bouchées, dans cette barbotine, de préférence en agitant celle-ci, puis l'étape de frittage du matériau d'imprégnation.

Selon cette technique, on effectue de préférence l'imprégnation du bloc poreux en position verticale ou oblique, le temps de trempage est compris entre 0 et 15 secondes et préférentiellement entre 0,5 et 8 secondes pour respectivement les zones immergées pendant le temps le plus court (qui donneront la porosité moyenne la plus proche de la porosité initiale) et les zones les immergées pendant le temps le plus long (qui donneront la porosité moyenne la plus différente de la porosité initiale).

L'imprégnation est mise en oeuvre à une étape du procédé qui ne risque pas de modifier les caractéristiques des membranes au stade ultérieur de leur frittage, et/ou de sorte que les étapes suivantes du procédé ne viennent pas dégrader les caractéristiques physiques de l'imprégnation, comme par exemple la perméabilité de la zone imprégnée.

L'imprégnation peut n'être que partielle (dans le sens de la longueur) dans une zone du support macroporeux.

Dans une deuxième variante, on peut aussi avoir recours à une technique de présaturation graduelle du support poreux qui est caractérisée en ce que l'on sature le bloc poreux avec un liquide, de préférence de l'eau, que l'on souffle avec de l'air comprimé dans les canaux depuis une des extrémités du corps poreux, l'autre extrémité pouvant être libre, partiellement ou totalement obturée, afin d'établir une perte de charge qui soit suffisante pour éliminer graduellement dans le sens longitudinal du bloc poreux, le liquide contenue dans la porosité dudit bloc, puis en ce que l'on trempe le bloc poreux en position verticale, oblique ou horizontale dans une barbotine à base de matériau céramique ou polymérique telle que décrite précédemment. Dans ce cas, la barbotine viendra occuper le volume poreux libre qui a été graduellement libéré par le soufflage, sans que la durée de séjour du bloc poreux dans la barbotine influence sensiblement la pénétration des zones qui doivent être faiblement imprégnées.

Ce support saturé en liquide et présentant un cône de volume libre est aussi un élément de l'invention.

On pourrait aussi pour faciliter la pénétration de la barbotine dans le volume inoccupé par le liquide de la préimprégnation mettre sous vide le bloc poreux.

Selon cette technique avec soufflage d'air, on effectue de préférence l'imprégnation du bloc poreux en position horizontale.

Selon la technique ci-dessus, on obtient un front d'imprégnation sensiblement net. Procédé par pulvérisation:

On peut utiliser d'autres moyens qui sont de nature à créer notamment un gradient de porosité dans le bloc poreux comme par exemple la projection d'une barbotine. Un tel procédé de fabrication lorsque le matériau d'imprégnation est un matériau céramique ou polymérique, comprend l'utilisation d'une barbotine dont la concentration en matériau céramique ou polymérique est comprise entre i et 60% volumique que l'on projette, par exemple à l'aide d'air comprimé, par l'intermédiaire d'une buse de pulvérisation déplacée en regard de la surface extérieure du bloc poreux qui se trouve en rotation suivant son axe longitudinal.

Le déplacement de la buse peut être progressif, c'est-à-dire à vitesse variable (croissante ou décroissante) et débit constant, ou à vitesse constante et à débit variable. Les vitesse et débit peuvent aussi varier tous les deux en même temps.

On peut aussi suivant cette technique faire une projection de barbotine sans utiliser l'air comme vecteur. Dans ce cas, le réservoir contenant la barbotine sera mis sous pression.

Une autre technique peut aussi être utilisée, qui consiste à utiliser en amont de la buse une pompe à liquide à haute pression.

Selon la technique ci-dessus, on obtient un front d'imprégnation sensiblement diffus.

Lorsque le matériau d'imprégnation est une résine, le procédé de dépose peut entre autres consister en ce que l'on réalise un mélange homogène de résine, de la quantité requise de durcisseur et d'un diluant qui abaisse la viscosité dudit mélange, puis en ce que l'on projette la préparation par l'intermédiaire d'un buse de pulvérisation que l'on déplace de manière progressive en regard de la surface du bloc poreux qui se trouve lui même en rotation suivant son axe longitudinal et en ce que l'on procède à la réticulation en température de la résine.

Le cycle de température est entre autres défini de façon à favoriser l'abaissement de la viscosité, afin de faciliter la migration de la résine dans la porosité du bloc de manière à n'obturer que partiellement la porosité du bloc.

Comme dans le cas précédent, on peut envisager d'imprégner le corps poreux en utilisant une résine avec catalyseur de réticulation à froid, elle aussi à deux composants que l'on dilue de manière à obtenir une viscosité qui permet de n'obturer que partiellement la porosité du bloc.

Comme dans le cas précédent, on peut envisager de travailler avec des résines de type monocomposant, que l'on diluera dans les mêmes conditions, puis que l'on déposera et réticulera en température suivant des cycles adaptés.

Par ailleurs, dans le cas d'utilisation des types de résines précités, on peut aussi réaliser l'imprégnation par trempage progressif du corps poreux dans une solution diluée de résine de type tels que décrits ci-dessus, puis de procéder à la réticulation par réaction chimique à froid ou en température.

Les exemples suivants illustrent l'invention sans la limiter.

Exemple 1.

On prépare une barbotine aqueuse à base d'alumine, dont le diamètre moyen de particules est de 0,4 micron, que l'on déflocule avec un acide polyacrylique tel que le DARVAN C® puis l'on effectue un broyage en jarre.

En proportion volumique, cette barbotine est constituée de:

| Alumine AES-11 | 43 % |
|---|---|
| DARVAN C® | 3,3 % |
| Eau | 53,7 % |
| Viscosité | 70 mPas. |

Le support ou bloc macroporeux présente une longueur de 1020 mm, et est percé de 19 canaux de 4 mm de diamètre, permettant de définir une ceinture de 2 mm de large. Il est caractérisé par une porosité initiale de 33 % et un diamètre de pore initial de 12 $\mu$m. On imprègne ce bloc poreux à l'aide d'un dispositif de trempage comprenant une pince tenant fermement le support macroporeux en position verticale, un rail de guidage pour la pince piloté par un servomoteur, des bouchons semiperméables permettant d'obturer les canaux du support macroporeux. La pince immerge progressivement le support macroporeux dans la barbotine contenue dans une cuve dont le fond est équipé d'un dispositif d'agitation de la barbotine adapté pour maintenir la suspension aqueuse homogène.

La pince de maintien est pilotée jusqu'à immersion totale dans le bain du support puis extraction. La programmation du pilote est telle que la vitesse linéaire de déplacement du support est sensiblement constante en valeur absolue, environ 25,5 cm/s, de sorte que le temps de séjour de la partie la moins longtemps en contact avec la barbotine est d'environ 0,5 s, tandis que le temps de séjour pour la partie la plus longtemps en contact avec la barbotine est d'environ 8 s.

Puis on sèche et l'on fritte le support macroporeux ainsi modifié à 1480°C pendant 5 heures.

En découpant des sections dans le support macroporeux, on mesure la profondeur d'imprégnation qui est de 2 mm à l'extrémité d'entrée et de 0,2 mm à l'extrémité de sortie du support. On note que le front est net et que l'imprégnation est linéaire dans l'épaisseur externe du support macroporeux.

La porosité de la zone imprégnée est de 8% tandis que celle de la zone non-imprégnée (porosité initiale) est de 33%. La porosité moyenne, le long du support, calculée sur la ceinture varie de 30,5 à 10,5, soit un ratio entrée - sortie de 2,9. Le diamètre de pores de la zone modifiée mesuré par porosimétrie mercure est de 4 $\mu$m, soit 0,33 fois le diamètre de pore initial.

Exemple 2

On dépose sur un support modifié tel que celui décrit dans l'exemple i une couche de filtration en zircone présentant un diamètre de pores de 0,1 μm.

On découpe des tronçons de 1 cm de large dans la membrane. Pour chaque tronçon on mesure la perméabilité transversale à l'eau en appliquant une différence de pression entre les canaux et la surface extérieure de 1 bar. On obtient ainsi un débit de 1,5 l/H (soit une perméabilité de 640 l/Hm$^2$ bar) pour le tronçon d'entrée de la membrane et un débit de 4,7 l/Hm$^2$ bar (soit une perméabilité de 2000 l/Hm$^2$ bar) pour le tronçon de sortie. Le rapport des perméabilités transversales des deux tronçons est donc de 0,32.

Exemple 3

On prépare une barbotine aqueuse à base d'alumine dont la taille moyenne des particules est d'environ 1 μm que l'on déflocule avec l'aide d'un acide alkylpolyglycol étherphosphorique (EMPHOS® PS21A ), puis l'on effectue un broyage en jarre.

En proportion volumique, cette barbotine est composée de:

| | |
|---|---|
| Alumine A.16 | 37,3 % |
| EMPHOS® PS21A | 1,8 % |
| Eau | 40,9 % |
| Ethanol | 20 % |
| Viscosité | 27 mPas |

On utilise un tube macroporeux présentant une porosité initiale de 45 % et un diamètre de pores initial de 15 μm. Le tube est recouvert d'une couche filtrante de 3 μm de diamètre de pores, et la ceinture a 3 mm de large.

On imprègne la surface externe de cette membrane par projection de la barbotine. Pour ce faire, le support macroporeux est mis en rotation à une vitesse d'environ 100 tpm suivant son axe longitudinal.

Une buse alimentée sous pression projette la barbotine sur la surface extérieure de la membrane. Cette buse se déplace parallèlement à l'axe du tube de manière progressive. Sa vitesse de translation est progressivement augmentée de 0,7 cm/s à 1,7 cm/s, obtenant ainsi une variation de la quantité de barbotine projetée en fonction de la localisation longitudinale de l'élément de surface extérieure considéré.

Après séchage et frittage à 1625°C pendant 3 heures on obtient une membrane modifiée.

En découpant des sections dans cette membrane, le front d'imprégnation est diffus, on mesure la profondeur moyenne d'imprégnation gui est de 1,7 mm à l'extrémité d'entrée et de 0,5 mm à l'extrémité de sortie du support. On note que l'imprégnation est linéaire dans l'épaisseur externe du support macroporeux.

La porosité de la zone imprégnée est de 12%. La porosité moyenne, le long du support, calculée sur la ceinture varie de 39,5 à 26,3, soit un ratio entrée - sortie de 1,5. Le diamètre de pores de la zone modifiée mesuré par porosimétrie mercure est de 10,5 μm, soit 0,7 fois le diamètre de pore initial.

Exemple 4

On projette sur la membrane poreuse de l'exemple 3 la même barbotine diluée avec de l'eau de façon à obtenir une concentration volumique en alumine de 1 %.

La buse de projection se déplace à la vitesse constante de 0,1 cm/s, mais son débit augmente progressivement de 1 l/mn à 26 l/mn.

Comme précédemment on procède à un frittage, puis à la détermination des porosités moyennes par découpe de tranche. Le front d'imprégnation est diffus. La profondeur moyenne de pénétration varie de 0,5 mm pour la zone la plus modifiée à 0 mm pour la zone la moins modifiée . La porosité de la zone imprégnée est de 20%. La porosité moyenne, le long du support, calculée sur la ceinture varie de 45 à 40,8, soit un ratio de porosité moyenne de 1,1. Le diamètre de pores de la zone modifiée mesuré par porosimétrie mercure est de 7,5 μm soit 0,5 fois le diamètre de pores de la zone non modifiée.

On découpe des tronçons de 1 cm de large dans la membrane. Pour chaque tronçon on mesure la perméabilité à l'eau en appliquant une différence de pression entre le canal et la surface extérieure de 1 bar. On obtient ainsi une perméabilité de 13 m3/Hm$^2$ bar pour le tronçon d'entrée de la membrane et une perméabilité de 27 m3/Hm$^2$ bar pour le tronçon de sortie. Le rapport de perméabilité est donc de 0,48.

Exemple 5.

On utilise une bloc macroporeux cylindrique présentant une longueur de 850 mm, et percé de 19 canaux de 3 mm de diamètre recouverts d'une couche filtrante ayant un diamètre de pore de 0,45 μm. On définit une ceinture de 1 mm de large. Cette membrane est caractérisé par une porosité initiale de 15 % et un diamètre de pore initial de 4 μm. On plonge cette membrane dans un bac d'eau de manière à saturer la porosité du support. On sort cette membrane du bac, on obture partiellement une extrémité, et on souffle de l'air comprimé propre et sec par l'extrémité libre des canaux. On élimine ainsi une partie de l'eau contenue dans la membrane afin d'obtenir un gradient conique d'eau dans le support macroporeux. La pièce est ensuite immergée à l'aide du dispositif décrit dans l'exemple 1 dans une suspension aqueuse à 65 % volumique de PTFE, le diamètre des particules de PTFE étant de 0,1 µm.

La vitesse d'immersion de 113 cm/s est constante. Dès que la membrane est immergée, elle est immédiatement retirée à la même vitesse de déplacement , de sorte que le temps de séjour de la partie la moins longtemps en contact avec la barbotine est de 0 s, tandis que le temps de séjour le plus long pour la partie la plus longtemps en contact avec la barbotine est d'environ 15 s.

Puis on sèche et l'on fritte le support macroporeux ainsi modifiés à 300°C pendant 1/2 heure.

En découpant des sections dans le support macroporeux, on mesure la profondeur d'imprégnation qui est de 0,9 mm à l'extrémité d'entrée et de 0 mm à l'extrémité de sortie du support. On note que l'imprégnation est linéaire dans l'épaisseur externe du support macroporeux.

La porosité de la zone imprégnée est de 4%. La porosité moyenne, le long du support, calculée sur la ceinture varie de 15 à 5,1, soit un ratio entrée - sortie de 2,9. Le diamètre de pore de la zone modifiée mesuré par porosimétrie mercure est de 0,4 µm, soit 0,1 fois le diamètre de pore initial.

Exemple 6.

On prépare une résine époxyde de type DJEBA DER 331 à base d'épichloridrines (disponible chez Dow-Chemical), que l'on mélange avec un durcisseur à base de phénylènediamine, puis un solvant de type méthyléthylcétone qui permet d'obtenir une concentration volumique de résine de 60 % et d'abaisser la viscosité du mélange. La température de mise en oeuvre du présent exemple est d'environ 20°C.

On modifie un élément céramique caractérisé par une porosité initiale de 30 %, un diamètre de pore initial de 8 µm et une épaisseur de ceinture de 4 mm. On met cet élément en rotation à environ 60 tpm, et l'on projette ledit mélange par l'intermédiaire d'une buse de pulvérisation que l'on déplace parallèlement à l'axe de rotation du corps poreux, en faisant varier la vitesse de déplacement progressivement de 0,1 cm/s à 3 cm/s, de manière à obtenir un gradient de pénétration de la résine sur la longueur de l'élément céramique.

La pièce ainsi traitée est maintenue en rotation jusqu'à élimination de la phase solvant, puis réticulation complète de la résine. Cette opération est de préférence réalisée à température constante.

Le front d'imprégnation est diffus et la porosité maximale de la zone imprégnée est de 4 %. La découpe de tranche dans le support permet d'estimer les profondeurs de pénétration à 3,5 mm pour une extrémité et à 0,2 mm pour l'autre extrémité. La porosité moyenne, le long du support, calculée sur la ceinture varie de 7,2 % à 28,7 % soit un ratio de porosité moyenne de 4. De plus le diamètre de pores est de 1 µm soit 0,12 fois le diamètre initial.

## Revendications

1. Support macroporeux pour filtration tangentielle présentant un gradient de perméabilité selon le sens d'écoulement du fluide à traiter.

2. Support macroporeux pour filtration tangentielle présentant un gradient de porosité moyenne sur la ceinture selon le sens d'écoulement du fluide à traiter, la porosité moyenne augmentant selon ledit sens d'écoulement.

3. Support macroporeux selon la revendication 1 ou 2, dans lequel le gradient de porosité moyenne correspond à un gradient d'imprégnation à partir de la surface externe dudit support.

4. Support macroporeux selon la revendication 3, dans lequel le diamètre des pores de la zone imprégnée est compris entre 0,1 et 0,8 fois le diamètre des pores de la zone non-imprégnée.

5. Support macroporeux selon la revendication 4, dans lequel le diamètre des pores de la zone imprégnée est compris entre 0,3 et 0,5 fois le diamètre des pores de la zone non-imprégnée.

6. Support macroporeux selon l'une des revendications 1 à 5, dans lequel le ratio porosité moyenne sortie/porosité moyenne entrée est compris entre 1,1 et 4.

7. Support macroporeux selon l'une des revendications 1 à 6, dans lequel le niveau de porosité initial est compris entre 15 et 45%.

8. Membrane comprenant un support macroporeux selon l'une des revendications 1 à 7 en association avec une couche de filtration.

9. Procédé de préparation d'un support macroporeux selon l'une des revendications 1 à 7, comprenant l'étape d'immersion dans une barbotine ou une solution organique en position sensiblement verticale d'un support macroporeux initial dont l'extrémité inférieure est bouchée.

10. Procédé de préparation selon la revendication 9, dans lequel le temps de séjour est compris entre 0 et 15 sec. pour les parties respectivement les moins et plus immergées.

11. Procédé de préparation selon la revendication 10, dans lequel le temps de séjour est compris entre 0,5 et 8 sec. pour les parties respectivement les moins et plus immergées.

**12.** Procédé de préparation d'un support macroporeux selon l'une des revendications 1 à 7, comprenant l'étape de pulvérisation d'une barbotine ou d'une solution organique sur un support macroporeux normal, la zone de pulvérisation se déplaçant le long dudit support.

**13.** Procédé de préparation selon la revendication 12, dans lequel la vitesse de déplacement de la buse de pulvérisation est comprise entre 0,1 cm/s et 3 cm/s.

**14.** Procédé de préparation selon la revendication 13, dans lequel la vitesse de déplacement de la buse de pulvérisation est comprise entre 0,7 cm/s et 1,7 cm/s.

**15.** Procédé de préparation selon l'une quelconque des revendications 12 à 14, dans lequel le débit matière de pulvérisation est variable le long dudit support, la vitesse de déplacement de la buse de pulvérisation étant constante.

**16.** Procédé de préparation selon l'une quelconque des revendications 12 à 14, dans lequel le débit matière de pulvérisation est constant, la vitesse de déplacement de la buse de pulvérisation étant variable le long dudit support.

**17.** Procédé de préparation d'un support macroporeux selon l'une des revendications 1 à 7, comprenant l'étape de saturation en eau d'un support macroporeux normal, puis de l'étape d'injection de gaz dans ledit support dont l'extrémité de sortie est libre, partiellement obturée ou complètement obturée, et l'étape d'immersion en position sensiblement horizontale dudit support dans une barbotine ou une solution organique.

**18.** Support macroporeux saturé en liquide présentant un gradient de volume libre.

**19.** Utilisation d'une membrane selon la revendication 8 pour la filtration tangentielle.

FIG.1

FIG.2

Office européen
des brevets

**RAPPORT DE RECHERCHE EUROPEENNE**

Numéro de la demande

EP 00 11 9122

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN vol. 097, no. 002, 28 février 1997 (1997-02-28) -& JP 08 266837 A (AMANO CORP), 15 octobre 1996 (1996-10-15) | 1,2,8, 18,19 | B01D63/06 B01D69/10 |
| A | * abrégé * | 3-7,9,12 | |
| A | US 4 719 058 A (KOMODA TADANORI) 12 janvier 1988 (1988-01-12) * abrégé; figure 1 * * colonne 2, ligne 33 – colonne 3, ligne 53 * | 1-18 | |
| A | DE 26 35 167 B (ROSENTHAL AG) 6 octobre 1977 (1977-10-06) * revendication 1 * | 3,9 | |
| A | DE 35 23 068 A (ALTENBURGER ELECTRONIC GMBH) 8 janvier 1987 (1987-01-08) * revendications 2,3 * | 12-16 | |
| A | GB 1 330 037 A (DANSKE SUKKER FABRIKKER AS DE) 12 septembre 1973 (1973-09-12) * revendication 2 * | 1,2,8, 18,19 | **DOMAINES TECHNIQUES RECHERCHES (Int.Cl.7)** B01D |
| A | US 4 746 341 A (KOMODA TADANORI) 24 mai 1988 (1988-05-24) * abrégé; figure 1 * | 1,2,8 | |

Le présent rapport a été établi pour toutes les revendications

| Lieu de la recherche | Date d'achèvement de la recherche | Examinateur |
|---|---|---|
| LA HAYE | 25 septembre 2000 | Hoornaert, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................
& : membre de la même famille, document correspondant

EPO FORM 1503 03.82 (P04C02)

EP 1 052 013 A1

## ANNEXE AU RAPPORT DE RECHERCHE EUROPEENNE
## RELATIF A LA DEMANDE DE BREVET EUROPEEN NO.

EP 00 11 9122

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

25-09-2000

| Document brevet cité au rapport de recherche | Date de publication | Membre(s) de la famille de brevet(s) | | Date de publication |
|---|---|---|---|---|
| JP 08266837 A | 15-10-1996 | AUCUN | | |
| US 4719058 A | 12-01-1988 | JP | 1515156 C | 24-08-1989 |
| | | JP | 61238315 A | 23-10-1986 |
| | | JP | 63066566 B | 21-12-1988 |
| | | DE | 3612280 A | 15-01-1987 |
| | | FR | 2580274 A | 17-10-1986 |
| DE 2635167 B | 06-10-1977 | FR | 2360533 A | 03-03-1978 |
| | | GB | 1527068 A | 04-10-1978 |
| DE 3523068 A | 08-01-1987 | DE | 3515025 A | 30-10-1986 |
| | | DE | 3522725 A | 08-01-1987 |
| GB 1330037 A | 12-09-1973 | AU | 4147172 A | 25-10-1973 |
| | | CA | 971886 A | 29-07-1975 |
| | | CH | 555645 A | 15-11-1974 |
| | | DE | 2219638 A | 09-11-1972 |
| | | ES | 401912 A | 01-03-1975 |
| | | FR | 2133959 A | 01-12-1972 |
| | | IE | 36300 B | 29-09-1976 |
| | | IT | 1013523 B | 30-03-1977 |
| | | NL | 7205465 A | 25-10-1972 |
| | | SE | 388341 B | 04-10-1976 |
| US 4746341 A | 24-05-1988 | JP | 1708379 C | 11-11-1992 |
| | | JP | 3078130 B | 12-12-1991 |
| | | JP | 61238304 A | 23-10-1986 |
| | | DE | 3612825 A | 23-10-1986 |
| | | FR | 2580517 A | 24-10-1986 |
| | | US | 4810273 A | 07-03-1989 |

EPO FORM P0460

Pour tout renseignement concernant cette annexe : voir Journal Officiel de l'Office européen des brevets, No.12/82

12